# EUROPEAN PATENT SPECIFICATION

(11) **EP 3 113 038 B1**
(45) Date of publication and mention of the grant of the patent: **16.08.2023**
(21) Application number: 15174381.2
(22) Date of filing: 29.06.2015
(51) Int. Cl.: G06F 16/901, G06F 9/54

(54) **A DATA HANDLING METHOD**
DATENHANDHABUNGSVERFAHREN
PROCÉDÉ DE TRAITEMENT DE DONNÉES

(43) Date of publication of application: 04.01.2017
(60) Divisional application: 22208437.8
(73) Proprietor: Broadridge Financial Solutions Limited, London E14 9SG (GB)
(72) Inventor: BROWNE, Gavin, London E14 9SG (GB)
(74) Representative: Ahmad, Sheikh Shakeel

(56) References cited:
- US-A- 4 841 433
- US-A- 5 819 282
- US-A1- 2014 282 391
- JOE WINCHESTER ET AL: "XML Serialization of Java Objects", INTERNET CITATION, June 2003 (2003-06), pages 1-9, XP002713150, Retrieved from the Internet: URL:http://java.sys-con.com/node/37550 [retrieved on 2013-09-18]

## Description

### TECHNICAL FIELD

The present invention relates to a data handling method for use in handling a general data structure in an efficient manner and a new data structure. The new data structure is optimised to enable the data handling method to achieve faster handling of the data structures when high volumes of data structures have to be processed.

### BACKGROUND

Generally, in computational data processing, data being processed are arranged in a data structure. Different programming languages utilise different data structures. One very common object oriented programming language is Java°. Java^{®} has several different data structures which are accessed in different manners and are optimised for that type of access.

Data structures are sometimes created for specific way in which they will be handled (accessed). For example, in Java°, an example data structure may be a Collection. A Collection is generally a framework that provides an architecture to store and manipulate a group of objects. It can be considered to be an object that can hold references to other objects, each object having a behaviour and a state. The Collection has interfaces (classes) which declare the operations that can be performed on each type of Collection. Standard Java^{®} libraries provide many types of Collections.

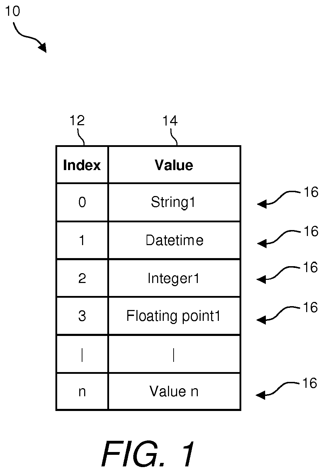

**Figure 1** shows a type of Java^{®} Collection known as an ArrayList 10. The ArrayList comprises a sequential index 12 and an array of values 14, each one being in a value field 16. Example elements of the value fields 16 are shown, though these are not limiting. ArrayLists 10 provide very fast write performance but are generally used for when all entries in the Collection are required to be read at the same time. In order to read or write to the ArrayList, a program running on a processor iterates through each entry in the Collection reading each item of the list sequentially even if only a few items are being read or written to.

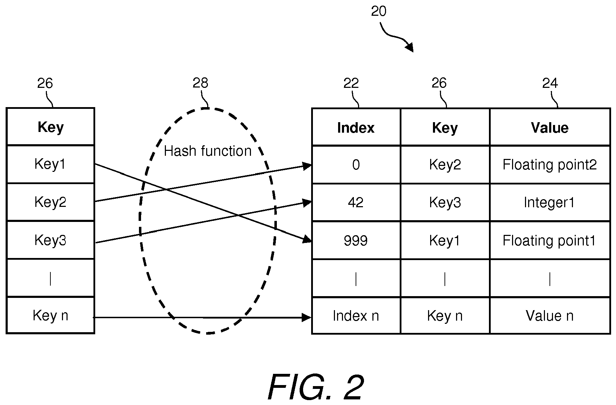

**Figure 2** shows a type of Java^{®} Collection data structure known as a HashMap 20. The HashMap 20 comprises a non-sequential index 22 and an array of values 24 corresponding to each index. Example elements of the Index field and the Value field are shown. In addition each HashMap 20 also comprises a corresponding key field 26. The key field 26 has a special relationship with the index 22 which is determined by a hash function 28. Accordingly, the use of a key field 26 as input into the hash function 28 will result in the generation of a unique index value corresponding to that key.

A standard Java Map such as a HashMap 20 involves a large number of equals checks (comparisons) on all of the available keys when implementing the hash function. This provides a generally constant access time for reading individual entries because they do not require any iteration of the data structure to find the required data. However, HashMaps 20 can be slower than an ArrayList 10 for a small size of Collection. HashMaps 20 are typically used when a large number of entries are being searched for a single item.

ArrayLists 10 and HashMaps 20 have the advantage that they are implemented in a standardised way in order to be interoperable across different processing systems.

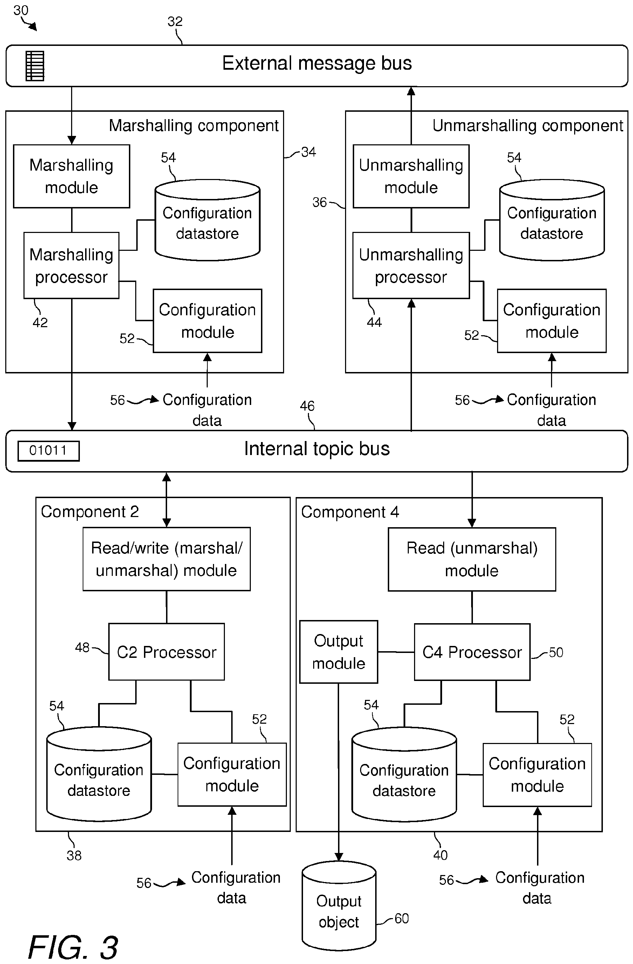

**Figure 3** shows a processing system 30 in which a stream of data structures is sent along an external message bus 32. For example, the external message bus 32 may be a communications channel on which real-time information is provided about an entity. The main objective of the processing system 30 is to read data from the external message bus 32 in different ways to build up a full picture about the entity. The processing system 30 may read or write to the same data structure many times via different components 34, 36, 38, 40.

When the system 30 processes data structures 10, 20, it is necessary for the system 30 to transform the data structure from a memory representation of the object to a common data format suitable for transmission or storage.

In this example, two components 34, 36 are shown connected to the external message bus 32, where each component comprises a processor 42, 44. A first component 34 is a marshalling component which generates a serial representation of the data and its conversion to the common data format (typically an XML format) is called 'marshalling' of the data. The serial representation generated by the marshalling component is output to an internal topic bus 46. As is known in the art, marshalling transforms the memory representation of a data object to a data format suitable for storage or transmission. This conversion into the common format is required when moving data between different processes within a system and enables rapid interaction of the processes with the data. The marshalling and unmarshalling components 34, 36 can be carried out by a well-known Java^{®} API called JAXB (Java^{®} architecture for XML binding).

A second component 36 is an unmarshalling component which performs the converse transformation back from the serial representation of the internal topic bus to output to the external message bus.

Two additional components 38, 40 (named "Component2" and "Component4" respectively) are shown connected to the internal topic bus 46 and which each perform multiple processes on the data. Component2 38 is arranged to perform read and/or write operations to the data, and Component4 40 is arranged to perform read operations to the data and output results to an object. In other embodiments, there may be hundreds of components connected to the internal topic bus 46 where each component may perform different operations on the data structure.

Each of the components 34, 36, 38, 40 comprises a processor 42, 44, 48, 50, a configuration module 52 and a configuration datastore 54. Each configuration module 52 and configuration datastore 54 are connected to their respective processor 42, 44, 48, 50. Configuration data 56 is input into each component via the configuration module 52. Configuration data 56 comprises instructions on how to iterate through an ArrayList 10 and/or how to perform a hash function 28 for a HashMap 20. The configuration data 56 also includes a target type of object that the component is arranged to process. Configuration data 56 is stored in a configuration datastore 54 in each component.

The processor 42, 44, 48, 50 in each component can use the configuration data 56 to obtain data values 14, 24. For example, if the data structure is in the format of an ArrayList 10, a processor would iterate through all the data of the data structure until it finds the desired data entry. If the data structure is in the format of a HashMap 20, the processor would input the key into the hash function 28 to determine the unique index, then use the index to obtain the data entry.

Each component 34, 36, 38, 40 is configured to look for a specific type of data structure (Collection) on the internal topic bus 46. The type of data structure generally indicates which rules/processes need to run on what fields from the Collections are used in the processes. When a component 34, 36, 38, 40 finds a Collection which matches its specific target type, that Collection can be processed by the component which has previously been specifically configured for processing that Collection.

Having established how these prior art systems 30 generally work, some of their limitations are now discussed.

When processing a large volume of data structures, primarily with read operations that do not utilise all data fields, ArrayLists 10 perform inefficiently as the entire data structure must be iterated through to find the desired data. Similarly, HashMaps 20 do not perform efficiently when a plurality of data fields in a data structure is used by a processing system (although HashMaps may perform well when a single data field is desired from a large data structure).

Given that each component 34, 36, 38, 40 will typically carry out hundreds of micro-processes (instructions) which contribute to the overall process of the component, the number of data structure accesses for reading data fields will be high. The inefficiency of the existing prior art methods means that the processing time for each component is high. Previous attempts to address this processing overhead have been directed to providing more computing power. However, this increases cost and complexity and is not ideal.

Against this background, the present invention aims to provide a data handling method that provides improved read access whilst retaining the benefits of interoperability across different processing systems without substantially increasing cost or complexity.

### SUMMARY OF THE INVENTION

The present invention resides in the appreciation that in a complex multi-component processing engine each data read that needs to be carried out is not completely independent of other data reads; namely, for any given application, a subset of all of the data fields can be determined which are the most common to all data searches for that application. Using this, it is possible to optimise the data processing by focussing on these most commonly accessed data fields and optimising then such that this reduces the overall processing time of a system which has thousands of processing components which each need to read the data structure multiple times, (typically hundreds of times).

In an embodiment of the present invention, a new data structure is created which is similar to an ArrayList in that it has a sequential index and an array of values, each one being in a value field. Also in the new data structure, an array of keys are provided for each value field in a similar fashion to a HashMap. A subset is defined in one embodiment as being the first several entries in the array, for example the first 20 out of 200 entries. These prioritised entries are determined to be the most commonly used fields in the reading of the Collections (or target data structures). In this regard, the data structure can act as a regular list for marshalling and unmarshalling, but can be accessed in a direct manner similar in some respects to a HashMap during component processing. Accordingly, when a data read is to be carried out, if the data field belongs to the subset of prioritised entries, then this data field can be accessed directly without the need for hash lookups or search iterations. If the data field is not in the subset, the remaining fields are searched, typically using an iterative search.

This weighted access to required data which prioritises a subset of data fields of the Collection, enables the desired result to be found more quickly, more often. This has led to a significant increase in the speed of reading a Collection by each of the different components of a processing system which has resulted in dramatic improvements to the processing speed of the system. At the same time, advantageously the data structure still retains a general format of a Collection in Java^{®} and can still be used by standard third party utilities such as JAXB for marshalling and unmarshalling for example.

More specifically, according to one aspect of the present invention there is provided method of processing a target data structure having a plurality of data fields and corresponding indices, the method comprising: receiving a pre-determined set of field names, wherein the set of field names comprises a prioritised subset of data fields of the target data structure including at least one prioritised field name and a corresponding index identifier; establishing, for each prioritised field name in the set of predetermined field names, an access key for directly accessing a data field of the target data structure using the index identifier to determine the corresponding index where the data field corresponds to the prioritised field name; and processing the target data structure to generate an output, wherein the processing step comprises reading a data value of a data fields of the target data structure directly using the access key when the data field to be read corresponds to a prioritised field name.

The term 'directly' is to be considered to mean without requiring conventional access processes for a data structure such as indexing (index searching) and hashing (e.g. using a HashMap). Rather the index value is predetermined and so the required data value can simply be looked up in the indexed data structure using the known index.

Preferably the method further comprises: obtaining the target data structure from a data bus; and for each data field in the target data structure which corresponds to a prioritised field name, mapping that data field to a location corresponding to the index identifier for that prioritised field name.

This mapping advantageously means that the target data structure does not have to be in the same format as the weighted data structure. When the target data structure is obtained, if it does not have the prioritised fields in the corresponding index locations to the weighted data structure, the mapping step accounts for this by linking the two locations together enabling the processing function of the component to be unaffected.

In a preferred embodiment, the obtaining step comprises: creating an indexed weighted data structure, reading the target data structure into the weighted data structure; and for each data field of the target data structure that corresponds to a prioritised data field, mapping that data field to an index of the weighted data structure corresponding to the index identifier for that prioritised field name.

An embodiment of the present invention is highly configurable and in one application can be used to model or process a complex entity. It can also handle large numbers of data structures each with many fields. Furthermore, the present embodiments use industry standard tools (in this case utilise Java Collection format) and have a low risk profile, namely avoid creation of complex customisations.

The creating step may comprise configuring the weighted data structure to have a set of prioritised data fields corresponding to the pre-determined set of field names. Where this is the case, the configuring step may comprise placing 'null' values into any of the prioritised data fields which do not have any corresponding data available from the target data structure. In a described embodiment, the weighted data structure is a Java Collection data structure.

The target data structure can be in a marshalled format and the obtaining step may comprise unmarshalling the target data structure into a memory representation format for the processing step. In an embodiment the marshalled format is an XML format and the memory representation format is a Java format.

The receiving step may comprise receiving a predetermined target type value and the obtaining step may comprise determining whether a value of a data structure type field of the target data structure matches the predetermined target type value to enable the processing step to be carried out.

The receiving step may comprise receiving configuration data for configuring the processing step.

In an embodiment, the processing step comprises running a plurality of micro processes on different fields of the weighted data structure. The processing step comprises running a plurality of different validation processes on the weighted data structure to ensure the data is valid. Also the processing step may comprise running a plurality of different enrichment processes on the weighted data structure to generate new data values of data fields and writing the new data values to data fields of the weighted data structure.

The processing step may comprise creating the output as an output data structure of a different type to that of the target data structure. Alternatively, the processing step may comprise: creating the output as an output data structure of the same type as the target data structure; marshalling the data into a marshalled format; and outputting the marshalled data structure.

The processing step may comprise reading a data value of a specific data field of the target data structure by searching the target data structure for the specific data field when the data field to be read does not correspond to a prioritised field name.

In this case, the searching step may comprise carrying out an iterative search of data fields of the target data structure which do not correspond to any of the predetermined set of field names.

In accordance with another aspect of the present invention there is provided a data processing engine for processing a target data structure having a plurality of data fields and corresponding indices, the data processing engine comprising a plurality of different components, each component comprising: a receiver for receiving a pre-determined set of field names, wherein the set of field names comprises a prioritised subset of data fields of the target data structure including at least one prioritised field name and a corresponding index identifier; a key generator for establishing, for each prioritised field name in the set of predetermined field names, an access key for directly accessing a data field of the target data structure using the index identifier to determine the corresponding index where the data field corresponds to the prioritised field name; and a processor for processing the target data structure to generate an output, wherein the processor is arranged to read a data value of a data field of the target data structure directly using the access key when the data field to be read corresponds to a prioritised field name.

The data processing engine may further comprise a marshalling component for marshalling target data structures into a marshalled format from an external message bus to an internal topic bus connected to the plurality of different components.

In an embodiment of the present invention, the data processing engine further comprises an unmarshalling component for unmarshalling target data structures from a marshalled format on an internal topic bus to an unmarshalled format on an external message bus to an internal topic bus connected to the plurality of different components.

The present embodiment can process millions of target data structures per hour and operate much faster than conventional processing engines and systems (see later for comparative results). The speed up achieved by the above described realisation that most of the required data reads for processes occurring at different components involves a small subset of common data fields. In fact the inventor has determined that in one field of use, more than 95% of all accesses can be traced to a relatively small subset of data fields.

### BRIEF DESCRIPTION OF THE DRAWINGS

Figures 1 to 3 have already been described above by way of background, in which:
**Figure 1** is a schematic view of the structure of an ArrayList;
**Figure 2** is a schematic view of the structure of a HashMap; and
**Figure 3** is a schematic block diagram of a prior art system for processing the ArrayList of **Figure 1** and/or the HashMap of **Figure 2****.**

An embodiment of the present invention will now be described in detail by way of example only, with reference to the remaining drawings, in which:
**Figure 4** is a schematic view of the structure of a weighted data structure according to an embodiment of the invention;
**Figure 5** is a schematic block diagram of a system for handling and processing the data structure of **Figure 4****;**
**Figure 6** is a flowchart of a data handling method according to an embodiment of the invention;
**Figure 7** is a flowchart showing in detail a step of configuring components in the method of **Figure 6****;**
**Figure 8** is a flowchart showing in detail a step of running components in the method of **Figure 6****;**
**Figure 9** is a flowchart showing in detail a step of Process A in the method of **Figure 8****;** and
**Figure 10** is a flowchart showing in detail a step of Process B in the method of **Figure 8****.**

### DETAILED DESCRIPTION

Specific embodiments of the present invention are described below with reference to the figures.

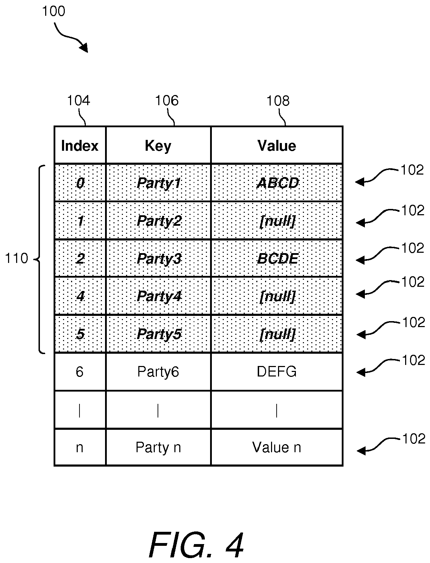

**Figure 4** shows a weighted data structure 100 according to an embodiment of the invention. Each weighted data structure 100, which in this embodiment is a Java^{®} object in the form of a Collection, typically has between 150 and 200 data fields 102, namely this is the size of index 'n' in **Figure 4****.** Each data field 102 in the data structure comprises an index 104, a field name 106 (i.e. a key) and a data value 108. The data value 108 may be an integer, a floating point number, a time, a date, ASCII characters etc. The format of the weighted data structure 100 is sometimes termed a memory representation format because the format is suitable for representing the memory organisation of the data.

In the example of **Figure 4****,** the data fields from index 0 to 5 (shaded in the figure for illustrative purposes) are defined as a set of prioritised data fields 110. The data values 108 in the set of prioritised data fields 110 are frequently accessed by processes using the data structure 100. The set of prioritised data fields 110 utilise the first six indexes. In other embodiments, the set of prioritised data fields utilise predetermined indexes in the data structure which may be non-sequential. In either case, this set of prioritised data fields 110 is a subset of all of the data fields of the weighted data structure 100.

It is to be appreciated that not all fields of the weighted data structure 100 are populated with meaningful data. In the cases where no data is available from the target data structure (namely the data structure being read from the internal topic bus 46) the data value at these fields can be set to 'null'.

The weighted data structure 100 can be accessed by processes in accordance with a pre-determined configuration which associates the field names with the corresponding index for the set of prioritised data fields 110. Processes may perform actions (e.g. read and/or write) on a plurality of data fields 102 by referencing the field name 106 to obtain the corresponding data value 108. For field names in the set of prioritised data fields 110, the process looks up the corresponding index using the pre-determined configuration to directly access the data value. For field names that are not in the set of prioritised data fields 110, the process iterates through each data field that is not in the set of prioritised data fields until it finds the desired data field to access the data value (which is substantially similar to data access in an ArrayList 10).

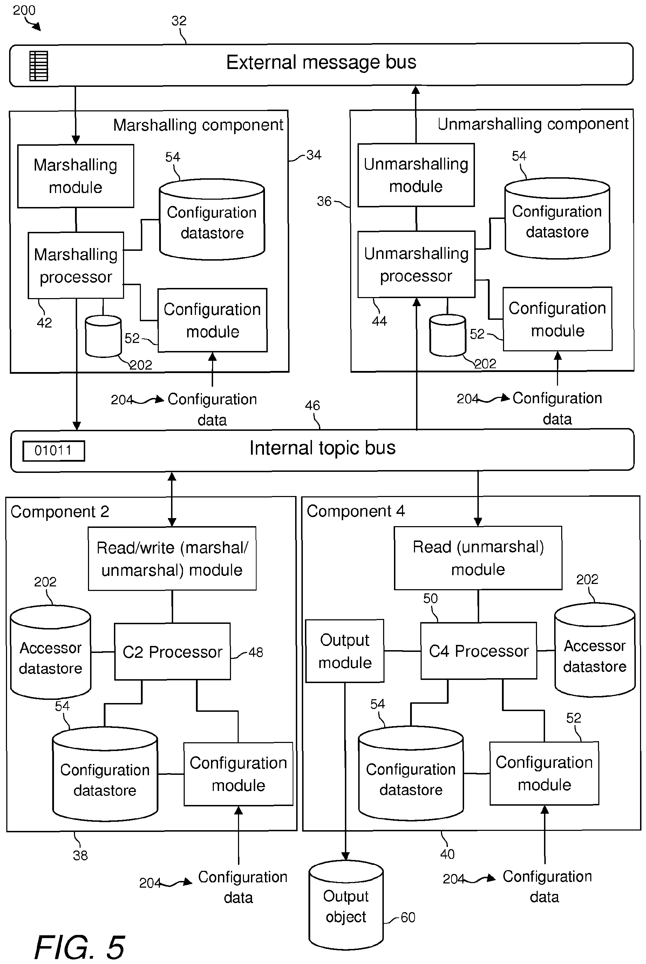

**Figure 5** shows a processing system 200 substantially similar in its general composition to the prior art processing system 30 described with reference to **Figure 3****.** However there some differences in structure which enable substantial differences in the manner of operation of the system which in turn leads to the increased performance of the present embodiment (see later). Accordingly for the sake of brevity, only the differences between the prior art systems 30 and the present embodiment are elaborated on below.

In addition to the processing system of **Figure 3****,** Component2 38 and Component4 40 in the processing system 200 of **Figure 5** each comprise an accessor datastore 202. In the embodiment of **Figure 5****,** configuration data 204 received by each component 34, 36, 38, 40 comprises configuration tasks which each define a pre-determined set of field names relating to prioritised data fields 110. These field names are a predetermined subset of the total possible field names of the target data structure. The field names chosen to be in this subset are the most commonly used field names in the processing carried out across all of the components of the processing engine.

The processors of Component2 48 and Component4 50 are arranged to interpret each of the configuration tasks into a Java object or subroutine that provides direct access to a specific location (index) of the data structure without requiring any search of the data structure. The interpreted configuration tasks are stored in the accessor datastore 202.

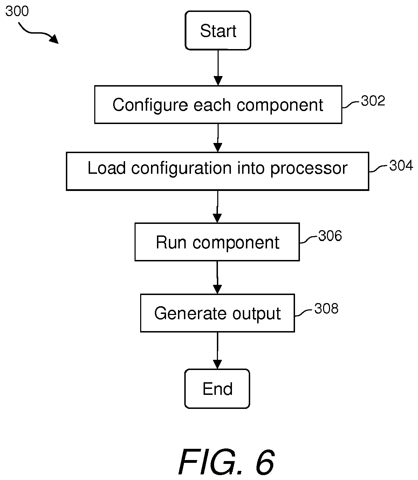

**Figure 6** shows a process 300 utilising the weighted data structure 200 according to an embodiment of the invention. The process begins with each component 34, 36, 38, 40 being configured at Step 302 using the configuration data 204. The configuration is then loaded at Step 304 into the processor 42, 44, 48, 50 of each component.

Following this, the component runs at Step 306 its process using the data values in the data structure 200. This process 306 may in fact be hundreds of micro processes operating on the same weighted data structure (for example implementing rules, or carrying out validation processes or even enriching the data structure with newly calculated data), almost entirely requiring reads of the data structure. An output of the process is generated at Step 308.

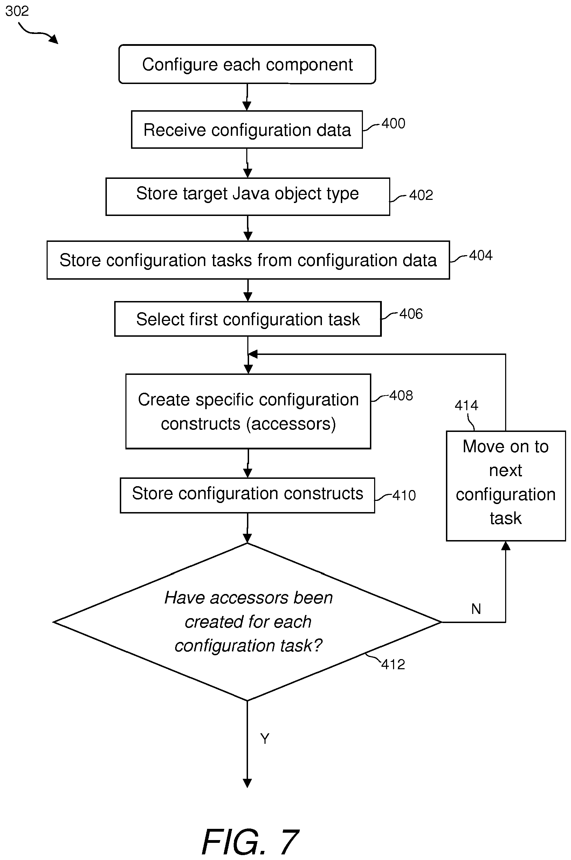

**Figure 7** shows a process of Step 302 of configuring each component in greater detail. The process 302 with the component receiving at Step 400 is the configuration data 204 at the configuration module 52. The configuration module 52 stores at Step 402 (in the configuration datastore 54) the type of object that the component 34, 36, 38, 40 is arranged to process. This is termed the target object type. Then the configuration module 52 stores at Step 404 the configuration tasks in the configuration datastore 54.

Following this, the processor selects at Step 406 the first configuration task. Then the processor creates at Step 408 configuration constructs for the first configuration task. A configuration construct may be a Java object or subroutine and may be referred to as an 'accessor 'or 'access key' in the discussion below. The configuration constructs for the first configuration task that are created in Step 408 are stored at Step 410 in the configuration datastore 54.

The processor then checks at Step 412 whether accessors have been created for each configuration task received at Step 400. If not, then the processor moves on at Step 414 to the next configuration task and the process returns to Step 408. Once accessors have been created for each task, then Step 302 of configuring the component is complete.

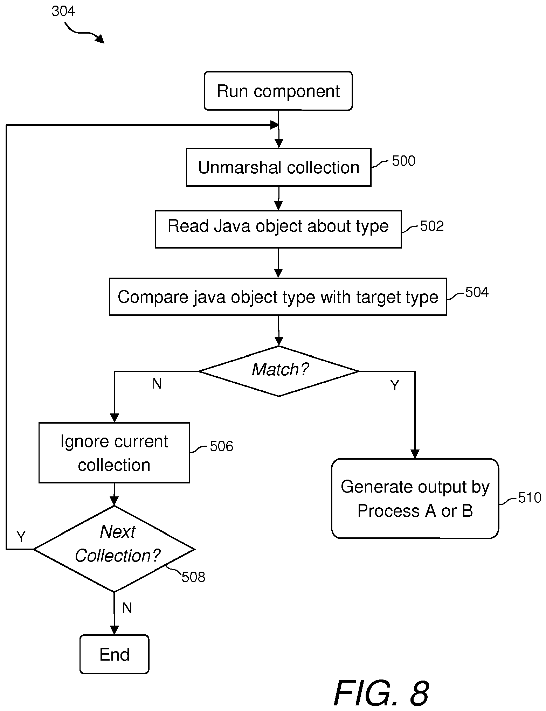

**Figure 8** shows a process of Step 304 of running a component process in greater detail. Firstly, data is obtained from the internal topic bus and unmarshalled at Step 500 into the weighted data structure. Unmarshalling uses the configuration constructs to determine what index position to place the data in. Accordingly, the order of the data fields may change when the data is unmarshalled by the component. By this process, the exact locations each of the prioritised data fields 110 are now known to the component without the need at run time for any searching of the weighted data structure.

Then the header of the data structure from the internal topic bus is read at Step 502 to obtain the data type. The data type is compared at Step 504 against the target data type that the component is arranged to process.

If the data type does not match the target data type, then the data structure is ignored at Step 506. This is because the component is not configured to process the current data structure. Following this, the process of the Step 508 checks whether there are any more data structures on the internal topic bus that require processing. If not, then the process ends. If, after the check of Step 508, there are more data structures to be read, the process returns to Step 500 of unmarshalling the data structure.

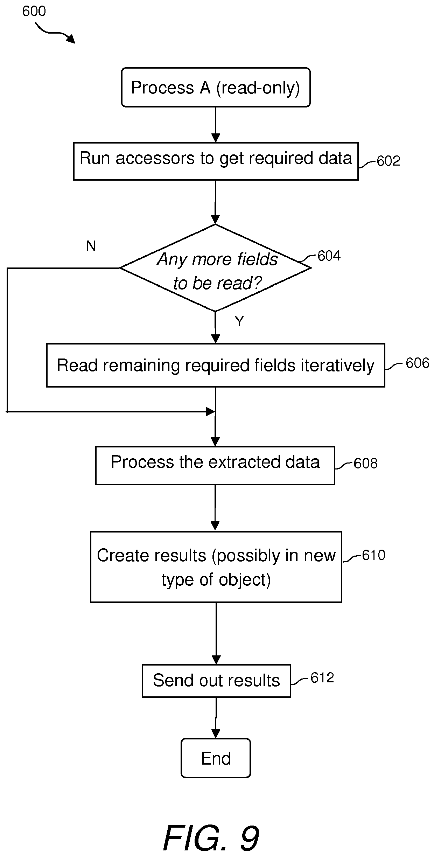

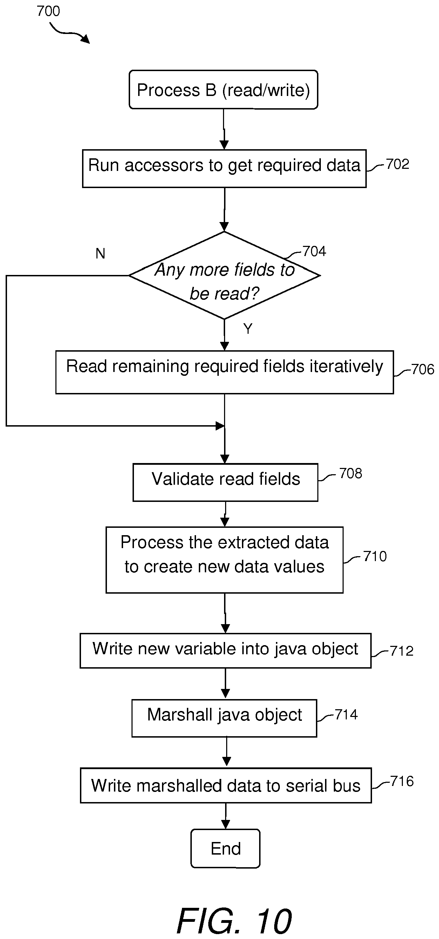

If, following the check of Step 504, the data type matches the target data type then the process A or B is carried out at a Step 510. Process A is an example of a read-only process (described in more detail with reference to **Figure 9**) carried out by component4 40, and Process B is an example of read/write process (described in more detail with reference to **Figure 10**) carried out by component2 38.

**Figure 9** shows a process 600 of Step 510 (Process A) in greater detail. Process A begins with the accessors being run at Step 602 to obtain the data values from any of the set of prioritised data fields 110 that are used by the processor 50 of the component4 40.

The processor 50 then checks at Step 604 whether any additional data fields (i.e. data fields not in the set of prioritised data fields 110) are required by the processor component. If the component4 40 requires any additional data fields, then the processor 50 iterates at Step 606 through the data structure to find the desired data fields. Once all data fields have been identified through iteration at Step 606, or if after Step 604 no additional data fields are required, then the data values are extracted at Step 608 from the data fields.

The processor 50 then executes its processes which includes carrying out calculations on the extracted data values to create at Step 610 results. The processor is configured to create an output which may be in the form of a new type of object using the results. The generated output is then sent at Step 612 from the component to in the form of the output object 60, ending the processes 600 and 300.

**Figure 10** shows a process 700 of an alternative Step 510 (Process B) in greater detail. This process would be carried out at a different component which has been configured differently to a component executing Process A, e.g. component2 38. Process B begins with the accessors being run at Step 702 to obtain the data values from any of the set of prioritised data fields 110 that are used by the component2 38.

The processor 48 then checks at Step 704 whether any additional data fields (i.e. data fields not in the set of prioritised data fields 110) are required by the component2 38. If the component requires any additional data fields, then the processor iterates (searches) at Step 706 through the data structure to find the desired data fields. Once all data fields have been identified through iterative searching at Step 706, or if after Step 704 no additional data fields are required, then the data values are extracted at Step 708 from the data fields.

The extracted data is validated (using validation processes provided at the component) at Step 708 to ensure data integrity. Calculations are then performed on the extracted data values to create at Step 710 new data values. These processes can be considered to be enrichment processes because they create new data which enriches the original data of the target data structure. The new data values are then written at Step 712 into the weighted data structure 100. The data structure is then marshalled at Step 714 into a serial representation of the data and subsequently the marshalled data is written at Step 716 back to the internal topic bus, ending the process.

Using the weighted data structure with the set of prioritised data fields reduces the data access times by components compared to using an ArrayList 10 or a HashMap 20 as the commonly accessed data fields can be directly accessed.

**Table 1** shows indicative access counts for different operations (e.g. read, write, marshal, unmarshal) that a processing system may carry out on a data structure. Note, for a given field, the number of write operations tend to be either zero or one throughout the lifecycle so write performance is not a major contributor to processing time compared to total read time.

**Table 1 - Typical data field access counts**

| **Data Field** | **Marshal** | **Unmarshal** | **Read** | **Write** |
|---|---|---|---|---|
| **Security** | 2 | 15 | About 500 | 1 |
| **Comment** | 2 | 15 | 1 | 0 |

**Table 2 - Example test run times**

| | **Test 1 (milliseconds)** | **Test 2 (milliseconds)** |
|---|---|---|
| **ArrayList** | 20,626 | 27,478 |
| **HashMap** | 13,802 | 13,643 |
| **Weighted data structure** | 3,370 | 3,843 |

The results of two tests are shown in **Table 2.** In Test 1, a test on a component using five prioritised data fields carrying out its process of generating an output 1 million times, took 20,626 milliseconds using an ArrayList and 13,802 milliseconds using a HashMap, compared to 3,370 milliseconds using the weighted data structure. This shows that the weighted data structure enabled the process to perform about four times faster than a HashMap, and six times faster than an ArrayList.

In Test 2, a component using five non-prioritised data fields carrying out its process of generating an output 1 million times, took 27,478 milliseconds using an ArrayList and 13,643 milliseconds using a HashMap, compared to 3,843 milliseconds using the weighted data structure. Performance is improved for the non-prioritised data fields because the process does not have to iterate through the whole data structure, it can iterate through only the non-prioritised data fields. This shows that the weighted data structure enabled the process to perform about 3.5 times faster than a HashMap, and seven times faster than an ArrayList.

As the person skilled in the art will appreciate, modifications and variations to the above embodiments may be provided, and further embodiments may be developed, without departing from the spirit and scope of the disclosure.

## Claims

1. A data processing system comprising a target data structure (100) and a data processing engine (200) for processing the target data structure (100), the data processing engine (200) comprising a plurality of different processing components (38, 40), each processing component (38, 40) being arranged to perform a different processing operation on the target data structure,
the target data structure (100) comprising a plurality of data fields (102), each of the data fields (102) having a corresponding index (104), and each of the data fields (102) comprising a field name (106) and a data value (108), wherein the target data structure (100) is a Java object in the form of a Collection data structure,
the data processing engine (200) further comprising:
an internal topic bus (46) connected to the plurality of processing components (38, 40);
a marshalling component (34) arranged to generate a serial representation of the target data structure (100) obtained from an external message bus (32) to marshal the target data structure (100) into a marshalled format from an unmarshalled format, the marshalling component (34) being arranged to place the marshalled format of the target data structure (100) onto the internal topic bus (46) such that the target data structure (100) can be conveyed to each of the plurality of processing components (38, 40) and processed by the same; and,
an unmarshalling component (36) arranged to perform a converse transformation back from the serial representation to unmarshal the processed target data structure (100) from the marshalled format on the internal topic bus (46) to the unmarshalled format, and the unmarshalling component (36) being arranged to output the processed target data structure (100) onto the external message bus (32),
each of the processing components (38, 40) of the data processing engine (200) comprising:
a receiver arranged to receive configuration data comprising configuration tasks which each define a predetermined set of prioritised field names (106), wherein the predetermined set of prioritised field names is a predetermined subset of the total possible field names (106) of the target data structure (100) including at least one prioritised field name and an index identifier corresponding to each respective prioritised field name;
a key generator arranged to establish, for each prioritised field name in the predetermined set of field names (106), an access key for directly accessing a specific location of the target data structure using the index identifier corresponding to the respective prioritised field name, wherein each of the access keys is a Java object or subroutine, and wherein the specific location is the index (104) of the target data structure (100) corresponding to the index identifier of the respective access key, the key generator being arranged to store the access keys in an accessor database of the respective processing component; and,
a component-specific processor (48, 50) arranged to: obtain data from the internal topic bus (46) and read the obtained data into the target data structure (100) using the access keys from the accessor database to determine what index position to place the obtained data in; read the data values (108) of respective data fields (102) directly using the access keys when the data fields (102) to be read correspond to one of the prioritised field names in the predetermined set, the component-specific processor (48, 50) being arranged to iterate through the target data structure to find additional data fields not corresponding to one of the prioritised field names if the additional data fields are required to be read; and, the component-specific processor (48, 50) being arranged to generate an output based on the data values (108) of the data fields (102) to be read, wherein the output is generated by carrying out calculations on the data values of the data fields (102) to be read to generate the output,
wherein the prioritised field names in the predetermined set is a subset including the field names of the data fields that are determined to be the most commonly accessed data fields in the processing carried out across all of the components of the data processing engine.

2. A data processing system according to Claim 1, the data processing engine (200) being arranged to:
obtain the target data structure (100) from the internal topic bus (46); and
for each data field in the target data structure which corresponds to a prioritised field name, map that data field to a location corresponding to the index identifier for that prioritised field name.

3. A data processing system according to Claim 2, wherein the data processing engine (200) is arranged to:
create an indexed weighted data structure (100);
read the target data structure into the indexed weighted data structure (100); and,
for each data field of the target data structure that corresponds to a prioritised data field, map that data field to an index of the indexed weighted data structure corresponding to the index identifier for that prioritised field name.

4. A data processing system according to Claim 3, wherein the indexed weighted data structure (100) is defined to include a set of prioritised data fields corresponding to the predetermined set of field names.

5. A data processing system according to Claim 4, wherein the data processing engine (200) is arranged to place null values into any of the prioritised data fields which do not have any corresponding data available from the target data structure.

6. A data processing system according to any previous claim, wherein the marshalled format is an XML format and the unmarshalled format is a memory representation format in the form of a Java format.

7. A data processing system according to any preceding claim, wherein for each of the plurality of different processing components the respective receiver is arranged to receive a predetermined target type value and the data processing engine (200) is arranged to determine whether a value of a data structure type field of the target data structure (100) matches the predetermined target type value to enable the respective component-specific processor (48, 50) to process the target data structure (100).

## Patentansprüche

1. Datenverarbeitungssystem, das eine Zieldatenstruktur (100) und eine Datenverarbeitungsmaschine (200) zur Verarbeitung der Zieldatenstruktur (100) umfasst, wobei die Datenverarbeitungsmaschine (200) eine Vielzahl verschiedener Verarbeitungskomponenten (38, 40) umfasst, jede Verarbeitungskomponente (38, 40) eingerichtet ist, einen verschiedenen Verarbeitungsvorgang an der Zieldatenstruktur durchzuführen,
wobei die Zieldatenstruktur (100) eine Vielzahl von Datenfeldern (102) umfasst, jedes der Datenfelder (102) einen entsprechenden Index (104) aufweist und jedes der Datenfelder (102) einen Feldnamen (106) und einen Datenwert (108) umfasst, wobei die Zieldatenstruktur (100) ein Java-Objekt in Form einer Sammeldatenstruktur ist,
wobei die Datenverarbeitungsmaschine (200) ferner umfasst:
Einen internen Themenbus (46), der mit der Vielzahl von Verarbeitungskomponenten (38, 40) verbunden ist;
eine verpackende Komponente (34), die eingerichtet ist, eine serielle Darstellung der Zieldatenstruktur (100) zu generieren, die von einem externen Nachrichtenbus (32) erlangt wurde, um die Zieldatenstruktur (100) in ein verpacktes Format aus einem entpackten Format zu verpacken, wobei die verpackende Komponente (34) eingerichtet ist, das verpackte Format der Zieldatenstruktur (100) auf den internen Themenbus (46) derart zu platzieren, dass die Zieldatenstruktur (100) zu jeder der Vielzahl von Verarbeitungskomponenten (38, 40) übermittelt und von diesen verarbeitet werden kann; und,
eine entpackende Komponente (36), die eingerichtet ist, eine umgekehrte Transformation zurück von der seriellen Darstellung durchzuführen, um die verarbeitete Zieldatenstruktur (100) aus dem verpackten Format auf dem Themenbus (46) in das entpackte Format zu entpacken, und die entpackende Komponente (36) eingerichtet ist, die verarbeitete Zieldatenstruktur (100) auf den externen Nachrichtenbus (32) auszugeben,
wobei jede der Verarbeitungskomponenten (38, 40) der Datenverarbeitungsmaschine (200) umfasst:
Einen Empfänger, der eingerichtet ist, Konfigurationsdaten zu empfangen, die Konfigurationsaufgaben umfassen, welche jeweils einen vorbestimmten Satz priorisierter Feldnamen (106) definieren, wobei der vorbestimmte Satz von priorisierten Feldnamen ein vorbestimmter Teilsatz der insgesamt möglichen Feldnamen (106) der Zieldatenstruktur (100) ist, der wenigstens einen priorisierten Feldnamen und einen Indexbezeichner einschließt, die jedem jeweiligen priorisierten Feldnamen entsprechen;
einen Schlüsselgenerator, der eingerichtet ist, für jeden priorisierten Feldnamen im vorbestimmten Satz von Feldnamen (106), einen Zugriffsschlüssel für direkten Zugriff auf eine spezielle Stelle der Zieldatenstruktur unter Verwendung des Indexbezeichners herzustellen, der dem jeweiligen priorisierten Feldnamen entspricht, wobei jeder der Zugriffsschlüssel ein Java-Objekt oder eine Unterroutine ist, und wobei die spezielle Stelle der Index (104) der Zieldatenstruktur (100) ist, die dem Indexbezeichner des jeweiligen Zugriffsschlüssels entspricht, wobei der Schlüsselgenerator eingerichtet ist, die Zugriffsschlüssel in einer Accessor-Datenbank der jeweiligen Verarbeitungskomponente zu speichern; und
ein komponentenspezifischer Prozessor (48, 50) eingerichtet ist, Folgendes zu tun: Abrufen von Daten vom internen Themenbus (46) und Lesen der abgerufenen Daten in die Zieldatenstruktur (100) unter Verwendung der Zugriffsschlüssel aus der Accessor-Datenbank, um zu bestimmen, in welche Indexposition die abgerufenen Daten zu platzieren sind; direktes Lesen der Datenwerte (108) jeweiliger Datenfelder (102) unter Verwendung der Zugriffsschlüssel, wenn die zu lesenden Datenfelder (102) einem der priorisierten Feldnamen im vorbestimmten Satz entsprechen, wobei der komponentenspezifische Prozessor (48, 50) eingerichtet ist, durch die Zieldatenstruktur zu iterieren, um zusätzliche Datenfelder zu finden, die keinem der priorisierten Feldnamen entsprechen, falls die zusätzlichen Datenfelder gelesen werden müssen; und der komponentenspezifische Prozessor (48, 50) eingerichtet ist, eine Ausgabe zu generieren, die auf den Datenwerten (108) der zu lesenden Datenfelder (102) beruht, wobei die Ausgabe durch Ausführungen von Berechnungen der Datenwerte der zu lesenden Datenfelder (102) ausgeführt wird, um die Ausgabe zu generieren,
wobei die priorisierten Feldnamen im vorbestimmten Satz ein Teilsatz sind, der die Feldnamen der Datenfelder einschließt, die als die üblichsten Feldnamen bestimmt sind, auf die bei der Verarbeitung zugegriffen wird, die über alle der Komponenten der Verarbeitungsmaschine ausgeführt werden.

2. Datenverarbeitungssystem nach Anspruch 1, wobei die Datenverarbeitungsmaschine (200) eingerichtet ist, Folgendes zu tun:
Abrufen der Zieldatenstruktur (100) aus dem internen Themenbus (46); und
für jedes Datenfeld in der Zieldatenstruktur, das einem priorisierten Feldnamen entspricht, Mappen jenes Datenfeld mit einer Stelle, die dem Indexbezeichner für jenen priorisierten Feldnamen entspricht.

3. Datenverarbeitungssystem nach Anspruch 2, wobei die Datenverarbeitungsmaschine (200) eingerichtet ist, Folgendes zu tun:
Schaffen einer indexierten gewichteten Datenstruktur (100);
Lesen der Zieldatenstruktur in die indexierte gewichtete Datenstruktur (100); und
für jedes Datenfeld der Zieldatenstruktur, das einem priorisierten Datenfeld entspricht, Mappen jenes Datenfelds an einen Index der indexierten gewichteten Datenstruktur, die dem Indexbezeichner für jenen priorisierten Feldnamen entspricht.

4. Datenverarbeitungssystem nach Anspruch 3, wobei die indexierte gewichtete Datenstruktur (100) definiert ist, einen Satz von priorisierten Datenfeldern einzuschließen, die dem vorbestimmten Satz von Feldnamen entsprechen.

5. Datenverarbeitungssystem nach Anspruch 4, wobei die Datenverarbeitungsmaschine (200) eingerichtet ist, Null-Werte in beliebige der priorisierten Datenfelder zu platzieren, welche keine entsprechenden Daten aus der Zieldatenstruktur verfügbar haben.

6. Datenverarbeitungssystem nach irgendeinem vorhergehenden Anspruch, wobei das verpackte Format ein XML-Format ist und das entpackte Format ein Speicherdarstellungsformat in Form eines Java-Formats ist.

7. Datenverarbeitungssystem nach irgendeinem vorhergehenden Anspruch, wobei für jede der Vielzahl verschiedener Verarbeitungskomponenten der jeweilige Empfänger eingerichtet ist, einen vorbestimmten Typ von Zielwert zu empfangen und die Datenverarbeitungsmaschine (200) eingerichtet ist, zu bestimmen, ob ein Wert eines Feldes des Datenstruktur-Typenfeldes der Zieldatenstruktur (100) dem vorbestimmten Typ von Zielwert entspricht, um dem jeweiligen komponentenspezifischen Prozessor (48, 50) zu ermöglichen, die Zieldatenstruktur (100) zu verarbeiten.

## Revendications

1. Un système de traitement de données comprenant une structure de données cible (100) et un moteur de traitement de données (200) destiné au traitement de la structure de données cible (100), le moteur de traitement de données (200) comprenant une pluralité de composants de traitement différents (38, 40), chaque composant de traitement (38, 40) étant agencé de façon à exécuter une opération de traitement différente sur la structure de données cible,
la structure de données cible (100) comprenant une pluralité de champs de données (102), chacun des champs de données (102) possédant un indice correspondant (104) et chacun des champs de données (102) comprenant un nom de champ (106) et une valeur de données (108), où la structure de données cible (100) est un objet Java sous la forme d'une structure de données de type Collection,
le moteur de traitement de données (200) comprenant en outre :
un bus topique interne (46) raccordé à la pluralité de composants de traitement (38, 40),
un composant de conversion (34) agencé de façon à générer une représentation en série de la structure de données cible (100) obtenue à partir d'un bus de message externe (32) de façon à convertir la structure de données cible (100) en un format converti à partir d'un format non converti, le composant de conversion (34) étant agencé de façon à placer le format converti de la structure de données cible (100) sur le bus topique interne (46) de sorte que la structure de données cible (100) puisse être acheminée vers chaque composant de la pluralité de composants de traitement (38, 40) et traitée par celui-ci, et,
un composant de déconversion (36) agencé de façon à exécuter une transformation inverse à partir de la représentation en série de façon à déconvertir la structure de données cible traitée (100) à partir du format converti sur le bus topique interne (46) vers le format non converti, et le composant de déconversion (36) étant agencé de façon à produire en sortie la structure de données cible traitée (100) vers le bus de message externe (32),
chacun des composants de traitement (38, 40) du moteur de traitement de données (200) comprenant :
un récepteur agencé de façon à recevoir des données de configuration comprenant des tâches de configuration qui définissent chacune un ensemble prédéterminé de noms de champ classés par ordre de priorité (106), où l'ensemble prédéterminé de noms de champ classés par ordre de priorité est un sous-ensemble prédéterminé de la totalité des noms de champ possibles (106) de la structure de données cible (100) comprenant au moins un nom de champ classé par ordre de priorité et un identifiant d'indice correspondant à chaque nom de champ classé par ordre de priorité respectif,
un générateur de clés agencé de façon à établir, pour chaque nom de champ classé par ordre de priorité dans l'ensemble prédéterminé de noms de champ (106), une clé d'accès destiné à un accès direct à un emplacement spécifique de la structure de données cible au moyen de l'identifiant d'indice correspondant au nom de champ classé par ordre de priorité respectif, où chacune des clés d'accès est un objet Java ou un sous-programme, et où l'emplacement spécifique est l'indice (104) de la structure de données cible (100) correspondant à l'identifiant d'indice de la clé d'accès respective, le générateur de clés étant agencé de façon à conserver en mémoire les clés d'accès dans une base de données d'accesseurs du composant de traitement respectif, et,
un processeur spécifique à un composant (48, 50) agencé de façon à : obtenir des données à partir du bus topique interne (46) et lire les données obtenues vers la structure de données cible (100) au moyen des clés d'accès provenant de la base de données d'accesseurs de façon à déterminer la position d'indice à laquelle placer les données obtenues, à lire les valeurs de données (108) de champs de données respectifs (102) directement au moyen des clés d'accès lorsque les champs de données (102) à lire correspondent à un des noms de champ classés par ordre de priorité dans l'ensemble prédéterminé, le processeur spécifique à un composant (48, 50) étant agencé de façon à effectuer une itération sur la structure de données cible de façon à trouver des champs de données additionnels ne correspondant pas à un des noms de champ classés par ordre de priorité si les champs de données additionnels doivent être lus, et le processeur spécifique à un composant (48, 50) étant agencé de façon à générer une production en sortie en fonction des valeurs de données (108) des champs de données (102) à lire, où la production en sortie est générée par l'exécution de calculs sur les valeurs de données des champs de données (102) à lire de façon à générer la production en sortie,
où les noms de champ classés par ordre de priorité dans l'ensemble prédéterminé sont un sous-ensemble comprenant les noms de champ des champs de données qui sont déterminés être les champs de données les plus couramment accédés dans le traitement exécuté sur la totalité des composants du moteur de traitement de données.

2. Un système de traitement de données selon la Revendication 1, le moteur de traitement de données (200) étant agencé de façon à :
obtenir la structure de données cible (100) à partir du bus topique interne (46), et
pour chaque champ de données dans la structure de données cible qui correspond à un nom de champ classé par ordre de priorité, mettre en correspondance ce champ de données avec un emplacement correspondant à l'identifiant d'indice pour ce nom de champ classé par ordre de priorité.

3. Un système de traitement de données selon la Revendication 2, où le moteur de traitement de données (200) est agencé de façon à :
créer une structure de données pondérée indexée (100),
lire la structure de données cible vers la structure de données pondérée indexée (100), et
pour chaque champ de données de la structure de données cible qui correspond à un champ de données classé par ordre de priorité, mettre en correspondance ce champ de données avec un indice de la structure de données pondérée indexée correspondant à l'identifiant d'indice pour ce nom de champ classé par ordre de priorité.

4. Un système de traitement de données selon la Revendication 3, où la structure de données pondérée indexée (100) est définie de façon à inclure un ensemble de champs de données classés par ordre de priorité correspondant à l'ensemble prédéterminé de noms de champ.

5. Un système de traitement de données selon la Revendication 4, où le moteur de traitement de données (200) est agencé de façon à placer des valeurs nulles dans l'un quelconque des champs de données classés par ordre de priorité qui ne possèdent pas de données correspondantes quelconques disponibles à partir de la structure de données cible.

6. Un système de traitement de données selon l'une quelconque des Revendications précédentes, où le format converti est un format XML et le format non converti est un format de représentation en mémoire sous la forme d'un format Java.

7. Un système de traitement de données selon l'une quelconque des Revendications précédentes, où pour chaque composant de la pluralité de composants de traitement différents, le récepteur respectif est agencé de façon à recevoir une valeur type cible prédéterminée et le moteur de traitement de données (200) est agencé de façon à déterminer si une valeur d'un champ type de structure de données de la structure de données cible (100) correspond à la valeur type cible prédéterminée de façon à permettre au processeur spécifique à un composant respectif (48, 50) de traiter la structure de données cible (100).
